# EUROPEAN PATENT APPLICATION

(11) **EP 0 864 973 A2**
(43) Date of publication of application: **16.09.1998**
(21) Application number: 98101199.2
(22) Date of filing: 23.01.1998
(51) Int. Cl.: G06F 9/46

(54) **Method of and apparatus for processing data**

(30) Priority: 12.02.1997 JP 27777/97
(71) Applicant: Dainippon Screen Mfg. Co., Ltd., Kamikyo-ku Kyoto 602 (JP)
(72) Inventor: Komaki, Jun, Dainippon Screen. Mfg. Co. Ltd., Horikawa-dori, Kamikyo-ku, Kyoto (JP); Shibata, Fumihara, Dainippon Screen. Mfg. Co. Ltd., Horikawa-dori, Kamikyo-ku, Kyoto (JP)
(74) Representative: WILHELMS, KILIAN & PARTNER Patentanwälte

(57) **Abstract**

An agent portion (AM) is provided between a job processing portion (JM) for managing and controlling a job indicating the flow of a series of processes and a data processing portion (DM) for practically processing data. The different control processes of respective processing portions of the data processing portion (DM) are performed by the agent portion (AM) constructed as a module different from a module corresponding to the job processing portion (JM). The job processing portion (JM) generates a job command independent of the processing portions (DM1, DM2, DM3, DM4). The agent portion (AM) converts the job command into a control command inherent in each of the processing portions (DM1, DM2, DM3, DM4). A data processing apparatus is constructed as above to reduce burdens on the functions of the job processing portion (JM), and to eliminate the need to change the job processing portion (JM) if the data processing portion (DM) is changed.

## Description

### BACKGROUND OF THE INVENTION

### Field of the Invention

The present invention relates to a method of and apparatus for processing data of an image for use in prepress, printing, display, and the like.

### Description of the Background Art

In prepress and printing steps and the like, an operator uses a computer such as a workstation to perform a layout process for arranging images and characters in a page. In such a process, the operator should be able to recognize an image on the screen of a display device provided in the computer such as a workstation. However, the image data for use in the prepress and printing steps generally has a high image density, and the layout process using such image data deteriorates the processing efficiency of the computer such as a workstation. To prevent the deterioration of the processing efficiency, low-resolution data of a low-density image is produced by thinning out pixels from high-resolution data having a high image density and is used for the layout process and the like.

There arises a need to replace the low-resolution data with the original high-resolution data to increase the image density when the result of the layout process is outputted to an output medium such as an output paper and film after the layout process using the low-resolution data or when an edited real image is displayed on the screen of a high-resolution display device. To this end, an OPI (open prepress interface) process is performed which replaces low-resolution data with high-resolution data to output high-density image data.

The high-density image data provided by the OPI process is converted into raster-type data when outputted to an output device such as a printer and an image setter. The process of converting the image data into the raster-type data is known as an RIP (raster image processor) process.

The layout process, the OPI process, and the RIP process are performed in sequential order in the prepress and printing steps, and the processed data is finally outputted to the output device and display device.

For processing data of an image for use in the prepress and printing steps, there have been two processing systems: a simple processing system comprising only a data processing portion such as an OPI processing portion and an RIP processing portion for processing input data in the above described order; and a more efficient processing system comprising a job processing portion for managing and controlling a job indicating the flow of a series of processes in addition to the data processing portions.

The job processing portion of the latter processing system has a man-machine interface function of receiving a command input by an operator and of informing the operator about processing conditions, a control function of transmitting a command and the like to the data processing portion such as the OPI processing portion and RIP processing portion to control the data processing portion, and a communication function of communicating with the data processing portion. The job processing portion determines the processing sequence of data processing to send a command for indicating processing contents to the data processing portion. If an input file and an output file are required to be specified in the course of a particular process such as the OPI process and the RIP process in the data processing portion, the job processing portion transmits a command responsive to the specified contents to the data processing portion. The data processing portion transmits a signal for reporting completion to the job processing portion each time the process for the command transmitted from the job processing portion is completed.

If an anomaly occurs during the processing in the data processing portion, the data processing portion transmits a signal for reporting an error to the job processing portion. Upon receipt of the signal, the job processing portion performs a suitable process, for example, transmits a signal for suspending the processing to the data processing portion.

In this manner, the job processing portion, after determining the data processing sequence, converts the contents of the job indicating the flow of a series of processes into control codes inherent in respective processing portions of the data processing portion to communicate with the data processing portion. This results in frequent communications between the job processing portion and the data processing portion. Further, the job processing portion must comprise a control code converter inherent in the data processing portion. A change in the data processing portion causes a change in the control code, requiring a change in the job processing portion.

In the background art apparatus described above, the job processing portion must send frequent communications responsive to the control codes of the processing portions of the data processing portion. This imposes a heavy burden on the job processing portion, resulting in low processing efficiency.

Additionally, a high processing speed and a high-quality processing result are required for the data processing portion. To meet the requirements, the devices of the data processing portion and a processing system are changed in a relatively short cycle with recent rapid advances in devices. However, such changes in the data processing portion cause changes in commands to be transmitted and a communication system.

The background art apparatus must make changes in the job processing portion each time the data processing portion is changed, presenting significant problems in terms of reliability, the number of process steps, and time required to perform the process steps.

### SUMMARY OF THE INVENTION

The present invention is directed to an apparatus for processing data of an image.

According to the present invention, the apparatus comprises a) a plurality of image-processing devices; b) job command generator means for generating a job command regardless of respective device-characteristics of the plurality of the image-processing devices; c) agent means for converting the job command into to a plurality of control commands dependent on the respective device-characteristics; and d) control means for controlling the plurality of image-processing devices in response to the plurality of control commands, respectively, to thereby conducting the job.

In a preferred embodiment of the present invention, the agent means comprises: c-1) a plurality of unit-agents dedicated to the plurality of image-processing devices, respectively.

Preferably, each unit-agent comprises: monitor means for monitoring an operation of a corresponding image-processing device without monitor-requests from the job command generator means.

In an aspect of the present invention, the monitor means comprises: means for generating an error signal when an error is detected in an operation of the corresponding image-processing device.

Each unit-agent may further comprise: means for transmitting an error message to the job command generator means in response to the error signal; and means for stopping the operation of the corresponding image-processing device.

The present invention also provide a method corresponding to the apparatus.

It is therefore an object of the present invention to provide a data processing apparatus which reduces burdens on a job processing portion and which is capable of changing a data processing portion without changing the job processing portion.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a system configuration for a data processing apparatus according to a first preferred embodiment of the present invention;
Fig. 2 is a diagram of the data processing apparatus according to the first preferred embodiment of the present invention;
Fig. 3 shows an arrangement of processing portions according to the first preferred embodiment of the present invention;
Fig. 4 shows communications between modules;
Fig. 5 shows communications between the modules when an error arises in a data processing portion;
Fig. 6 shows a system configuration for data processing apparatuses according to a second preferred embodiment of the present invention; and
Fig. 7 shows how processes are shared between the data processing apparatuses according to the second preferred embodiment of the present invention.

### DESCRIPTION OF THE PREFERRED EMBODIMENTS

### 〈1. First Preferred Embodiment〉

### 〈a. System Configuration〉

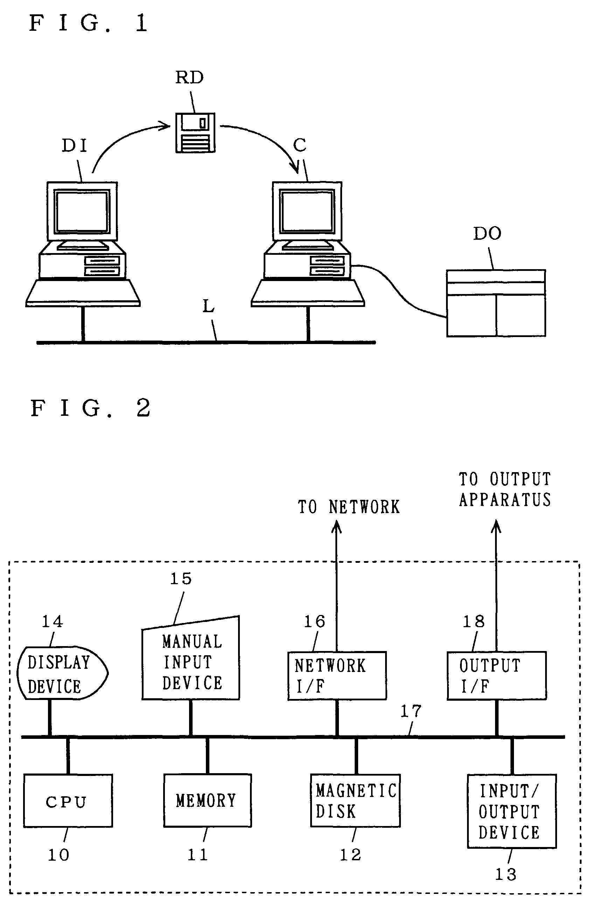

Fig. 1 shows a system configuration for a data processing apparatus according to a first preferred embodiment of the present invention. As shown in Fig. 1, a designing apparatus DI for retouches to and layouts for characters and image data and a data processing apparatus C are connected to each other via a network L. The data processing apparatus C is connected to an output apparatus DO such as an image setter, a plate recorder, a proofer, and a printer.

Low-resolution data of a low-density image subjected to a process such as retouches and layouts in the designing apparatus DI is transmitted on-line through the network L to the data processing apparatus C. Alternatively, the low-resolution data may be applied to the data processing apparatus C through a portable storage medium RD.

The data processing apparatus C converts the inputted low-resolution data into high-resolution data by an OPI process, and then performs an RIP process on the resultant high-resolution data to provide raster-type data to the output apparatus DO.

The internal structure of the data processing apparatus C of Fig. 1 is described below. Fig. 2 is a diagram of the data processing apparatus C according to the first preferred embodiment of the present invention. To a data bus 17 are connected a CPU 10 for performing practical data processing, a memory 11 for temporarily storing data, a magnetic disk 12 capable of storing inputted data and generated data over a long time period, an input/output device 13 for inputting and outputting data to and from the portable storage medium, a display device 14 for displaying processing conditions and the like, a manual input device 15 from which an operator inputs a command and the like, a network interface 16 serving as a connecting portion with the network, and an output interface 18 serving as an connecting portion with the output apparatus DO.

Data input from the designing apparatus DI of Fig. 1 to the data processing apparatus C is done through the network interface 16 if in an on-line condition, and through the input/output device 13 if in an off-line condition.

### 〈b. Module Structure〉

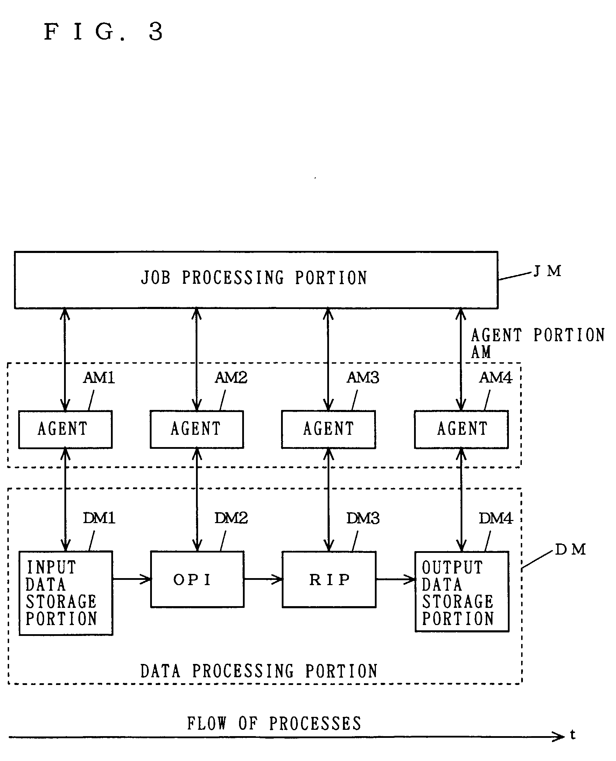

Next, the structure of processing portions implemented by the CPU 10 is described. Fig. 3 shows an arrangement of the processing portions according to the first preferred embodiment of the present invention. As shown in Fig. 3, the processing portions implemented by the CPU 10 of the data processing apparatus C are of three-level hierarchical construction comprised of a job processing portion JM, an agent portion AM, and a data processing portion DM. The execution of modules corresponding to the respective processes of the processing portions enables the processing of a job.

The job processing portion JM has a man-machine interface function which permits an operator to provide an instruction about processing contents. The job processing portion JM may have a GUI (graphical user interface) function for ease of operator's manipulation for providing the instruction. The job processing portion JM creates a job to be executed by the data processing portion DM in accordance with instruction information from the operator or present processing rules to transmit commands (job commands) for execution of the job in order of precedence to the agent portion AM.

The agent portion AM comprises a plurality of agents AM1, AM2, AM3 and AM4 corresponding to a plurality of processes to be executed in the data processing portion DM. The agent portion AM converts the job commands transmitted from the job processing portion JM into control codes (control commands) which the data processing portion DM is capable of executing and which are dependent on characteristics of devices inherent in the respective processing portions of the data processing portion DM to transmit the control codes to the data processing portion DM.

The data processing portion DM comprises a plurality of processing portions: an input data storage portion DM1, an OPI processing portion DM2, an RIP processing portion DM3, and an output data storage portion DM4. The processes to be executed in the data processing portion DM proceed in the direction of the arrow t of Fig. 3 indicating the flow of the processes.

The input data storage portion DM1 receives the data generated in the designing apparatus DI and the original high-resolution data from the network interface 16 or the input/output device 13 on the basis of a control code from the agent AM1 to store both of the data in the magnetic disk 12.

The OPI processing portion DM2 replaces low-resolution data used in the data subjected to the layout process and the like in the designing apparatus DI with high-resolution data on the basis of a control code from the agent AM2 to temporarily store the resultant high-resolution data in the memory 11 or the magnetic disk 12.

The RIP processing portion DM3 converts the high-resolution data provided from the OPI processing portion DM2 into raster-type data having a format suitable for output to the output apparatus DO on the basis of a control code from the agent AM3.

The output data storage portion DM4 stores the raster-type data generated by the RIP processing portion DM3 in the magnetic disk 12 and outputs the raster-type data through the output interface 18 to the output apparatus DO on the basis of a control code from the agent AM4.

In this manner, the job processing portion JM, the respective agents AM1, AM2, AM3 and AM4 of the agent portion AM, and the respective processing portions (the input data storage portion DM1, the OPI processing portion DM2, the RIP processing portion DM3 and the output data storage portion DM4) of the data processing portion DM are constructed as modules of a computer program which performs the processes after the input of data from the designing apparatus DI and before the output of data to the output apparatus DO. The functions of the processing portions are implemented when the CPU 10 of the data processing apparatus C executes the respective modules.

The term "module" used herein means a unit provided by dividing a program. A module is somewhat independent of other modules, but is not a complete program by itself. A plurality of modules are combined together to form one program. In the first preferred embodiment, the modules corresponding to the job processing portion JM, the agents AM1, AM2, AM3 and AM4 of the agent portion AM, and the processing portions (the input data storage portion DM1, the OPI processing portion DM2, the RIP processing portion DM3, and the output data storage portion DM4) of the data processing portion DM are combined together to construct a program for processing a job.

### 〈c. Data Communications Between Modules〉

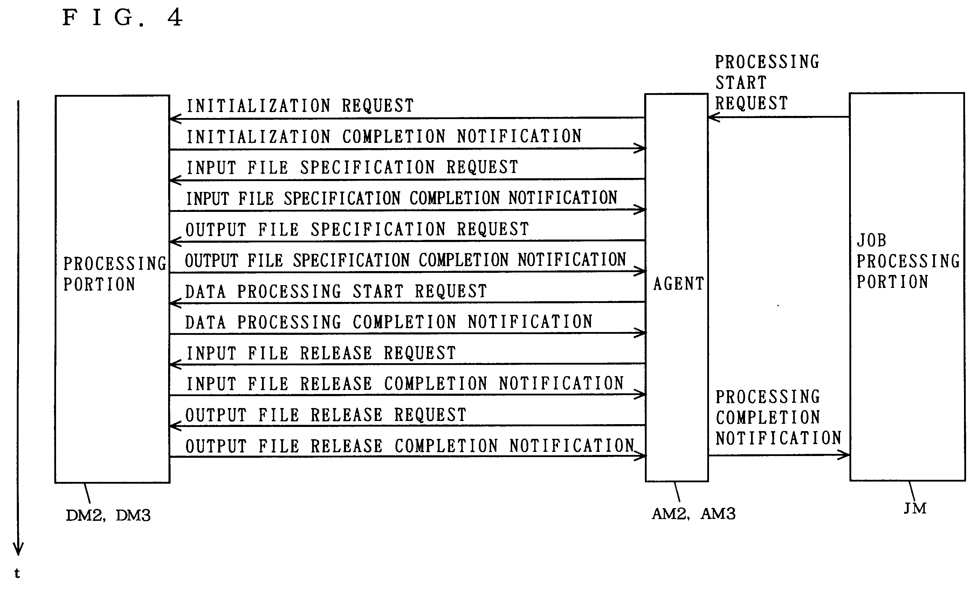

Data communications between the job processing portion JM and the agent portion AM and data communications between the agent portion AM and the data processing portion DM are described hereinafter. Fig. 4 shows communications between the modules in the case where the agent used herein is the agent AM2 for the OPI processing portion DM2 and the processing portion used herein is the OPI processing portion DM2 or where the agent used herein is the agent AM3 for the RIP processing portion DM3 and the data processing portion used herein is the RIP processing portion DM3. The transmission and reception of the respective data shown in Fig. 4 are not accomplished simultaneously but are done as the processes proceed in the direction of the arrow t indicating the flow of the processes. The transmission and reception of the respective data shown in Fig. 4 are communications between the modules through a register in the CPU 10 and the memory 11.

It should be noted that the job processing portion JM, the agents AM1, AM2, AM3 and AM4, and the processing portions DM1, DM2, DM3 and DM4 are all implemented by the CPU 10.

In operation, the CPU 10 executes a module corresponding to the job processing portion JM to obtain a function as the job processing portion JM. Then, the job processing portion JM transmits "processing start request" data for causing the OPI processing portion DM2 or the RIP processing portion DM3 to perform the job determined by the job processing portion JM to the associated agent AM2 or AM3. The "processing start request" data contains information about a file name of an input file to be processed in the OPI processing portion DM2 or the RIP processing portion DM3, a file name of an output file of processing results, and various parameters required for data processing.

Then, when the CPU 10 executes the module corresponding to the agent associated with the OPI processing portion DM2 or the RIP processing portion DM3, the agent AM2 or AM3 receives the "processing start request" data to transmit "initialization request" data in the form of a control code corresponding to device characteristics to the OPI processing portion DM2 or the RIP processing portion DM3. Next, when the CPU 10 executes the module corresponding to the OPI processing portion DM2 or the RIP processing portion DM3, the OPI processing portion DM2 or the RIP processing portion DM3 receives the "initialization request" data to initialize the processes. Upon completion of the initialization, the OPI processing portion DM2 or the RIP processing portion DM3 transmits "initialization completion notification" data to the agent AM2 or AM 3.

When the module corresponding to the agent AM2 or AM3 is executed, the agent AM2 or AM3 receives the "initialization completion notification" data to transmit "input file specification request" data indicative of the file name of data to be inputted and processed to the OPI processing portion DM2 or the RIP processing portion DM2 of the data processing portion DM. When the module corresponding to the OPI processing portion DM2 or the RIP processing portion DM3 is executed, the OPI processing portion DM2 or the RIP processing portion DM3 specifies the input file based on the "input file specification request" data. Upon completion of specification of the input file, the OPI processing portion DM2 or the RIP processing portion DM3 transmits "input file specification completion notification" data to the agent AM2 or AM3.

Similarly, the agent AM2 or AM3 transmits "output file specification request" data indicative of the name of a file to which the processing result is to be outputted to the OPI processing portion DM2 or the RIP processing portion DM3. Upon completion of specification of the output file, the OPI processing portion DM2 or the RIP processing portion DM3 transmits "output file specification completion notification" data to the agent AM2 or AM3.

Upon receipt of the "output file specification completion notification" data, the agent AM2 or AM3 transmits "data processing start request" data indicating the original purpose such as the OPI or RIP process to the OPI Processing portion DM2 or the RIP processing portion DM3. The OPI processing portion DM2 or the RIP processing portion DM3 receives the "data processing start request" data to start predetermined data processing. Upon completion of the data processing, the OPI processing portion DM2 or the RIP processing portion DM3 transmits "data processing completion notification" data to the agent AM2 or AM3.

Upon receipt of the "data processing completion notification" data, the agent AM2 or AM3 transmits "input file release request" data to the OPI processing portion DM2 or the RIP processing portion DM3. The OPI processing portion DM2 or the RIP processing portion DM3 releases the input file in response to the "input file release request" data. Upon completion of the input file release, the OPI processing portion DM2 or the RIP processing portion DM3 transmits "input file release completion notification" data to the agent AM2 or AM3.

Similarly, the agent AM2 or AM3 transmits "output file release request" data for providing an instruction for output file release to the OPI processing portion DM2 or the RIP processing portion DM3. After releasing the output file, the OPI processing portion DM2 or the RIP processing portion DM3 transmits "output file release completion notification" data to the agent AM2 or AM3.

Upon receipt of the "output file release completion notification" data, the agent AM2 or AM3 judges that the predetermined data processing has been completed in the OPI processing portion DM2 or the RIP processing portion DM3 to transmit "processing completion notification" data to the job processing portion JM.

In this manner, the agent portion is provided between the job processing portion and the data processing portion. Thus, the agent portion sends communications using the control codes corresponding to the respective processing portions to proceed the control process, reducing the communication burdens on the job processing portion. Consequently, the job processing portion may efficiently manage a universal job.

Further, if improvements or changes in the data processing portion cause changes in commands, only the agent associated with the improved or changed processing portion of the data processing portion should be modified, and the job processing portion is not required to change. This reduces the number of process steps and time required to perform the process steps when the data processing portion is changed, enhancing reliability.

### 〈d. Operation When Error Occurs〉

Processing when an error occurs in the data processing portion in the course of the sequential processes shown in Fig. 4 is described below. Errors that arise in the data processing portion DM include an anomaly in input data, the absence of available space in the magnetic disk 12 and the like, and the detection of a paper jam and a paper-out condition in the output apparatus DO by the output data storage portion DM4. In other words, errors mean the conditions wherein it is impossible for processing to proceed in the flow of the sequential processes of a job.

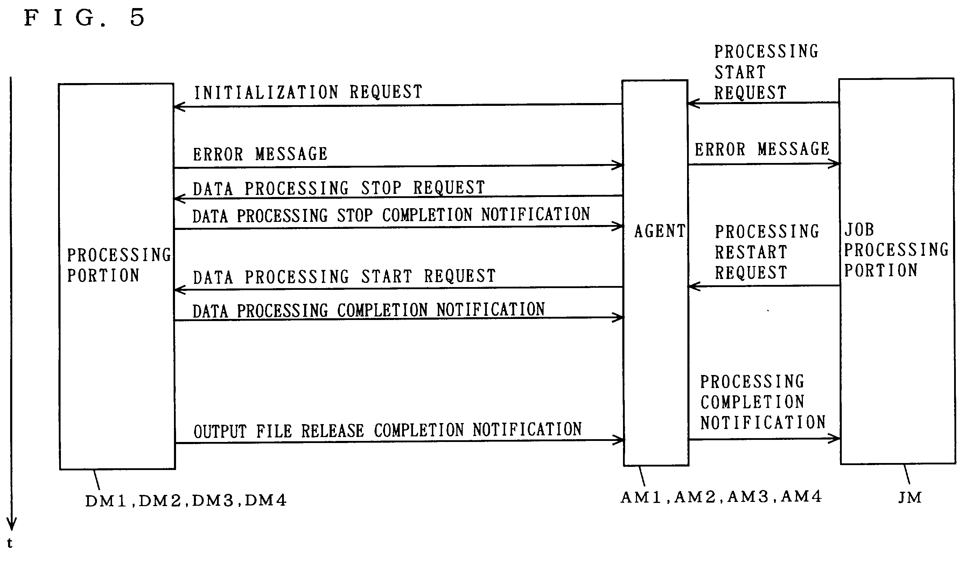

Fig. 5 shows communications between the modules when an error arises in the data processing portion. The processing portion shown in Fig. 5 represents any one of the input data storage portion DM1, the OPI processing portion DM2, the RIP processing portion DM3, and the output data storage portion DM4 shown in Fig. 3, and the agent shown in Fig. 5 represents the agent inherent in the represented data processing portion.

As above described, the job processing portion JM transmits the "processing start request" data for causing the processing portion to perform the processes of a job to the agent. Upon receipt of the "processing start request" data, the agent transmits the "initialization request" data in the form of a suitable control code to the processing portion.

If an error arises in the processing portion during the processing, the processing portion immediately transmits "error message" data for notification of the contents of the error to the agent. The agent transmits the "error message" data received from the processing portion to the job processing portion JM, and transmits "data processing stop request" data for suspending the processing to the processing portion.

Upon receipt of the "error message" data from the agent, the job processing portion JM alerts the operator to the occurrence of the error by displaying the contents of the error on the display device 14 or by an alarm device not shown. The processing portion suspends the processing therein on the basis of the "data processing stop request" data received from the agent to transmit "data processing stop completion notification" data to the agent. Thereafter, the input file or the output file is released as required.

The operator confirms the error condition on the display device 14 to suitably handle the error. For example, if the error message indicates "no available space in the magnetic disk 12", the operator manipulates the manual input device 15 to erase unnecessary data in the magnetic disk 12 to reserve available space. If the error message indicates a paper jam or a paper-out condition in the output apparatus DO, the operator removes the jammed paper or replenishes paper to eliminate the cause of the error. Upon eliminating the cause of the error, the operator inputs a command from the manual input device 15 to the job processing portion JM.

Then, the job processing portion JM transmits "processing restart request" data to the agent. Upon receipt of the "processing restart request" data, the agent transmits the "data processing start request" data in the form of a corresponding control code to the processing portion. Then, the input file or the output file is specified as required.

The processing portion restarts the processing in response to the "data processing start request" data from the agent. Then, the processing returns to the normal process and proceeds while communications similar to those shown in Fig. 4 are sent between the modules. Upon completion of the predetermined data processing, the processing portion transmits the "data processing completion notification" data to the agent. Thereafter, upon receipt of the "output file release completion notification" data from the processing portion, the agent judges that the predetermined data processing has been completed in the processing portion to transmit the "processing completion notification" data to the job processing portion JM.

As above described, in the case of the occurrence of an error in the processing portions, the agent notifies the job processing portion JM about the contents of the error, and the job processing portion JM notifies the operator about the occurrence of the error and the contents of the error.

### 〈e. Autonomous Monitor Function of Agent〉

A function of the agents which is to autonomously monitor the data processing portion is described hereinafter with reference to Fig. 3.

As above discussed, the input data storage portion DM1 receives the data generated in the designing apparatus DI (Fig. 1) and the original high-resolution data from the network interface 16 or the input/output device 13 on the basis of the control code from the agent AM1 to store both of the data in the magnetic disk 12.

Upon detecting the input of objective data of a job by communication with the input data storage portion DM1, the agent AM1 searches the magnetic disk 12 for information about the job in the inputted data to transmit the information to the job processing portion JM. The information about the job includes a title, creator's name, a date, the number of pages, a paper size, and the like. Alternatively, the input data storage portion DM1 may transmit the information to the agent AM1 by communication so that the agent AM1 obtains the information about the job.

The agent AM1 transmits the obtained information about the job to the job processing portion JM. This allows the job processing portion JM to recognize data management information about the names of files required for the sequential processes of the job and the storage locations of the files. The job processing portion JM transmits the data management information about the file names and the file storage locations to the agents AM2, AM3 and AM4.

Then, the agent AM2 searches the magnetic disk 12 to check whether or not high-resolution data required for the OPI processing portion DM2 is in the storage locations of the data management information. If the high-resolution data is not in the storage locations, the agent AM2 transmits a warning to the job processing portion JM. The agent AM2 which is designed to be capable of monitoring the data processing portion DM based on the data management information transmits a warning to the job processing portion JM if the operator attempts to change the file name of the high-resolution data or move a storage location. After receiving the warning from the agent AM2, the job processing portion JM alerts the operator by issuing an alarm or displaying a warning message on the display device 14.

When the data processing portion DM comprises a plurality of RIP processing portions, the agent AM3 universally manages and controls the plurality of RIP processing portions. The agent AM3 checks the RIP processing portions for their load conditions and processing capabilities to select an optimum RIP processing portion for processing.

The agent AM4 detects the size and type of paper to be outputted by the output data storage portion DM4 for use in the output apparatus such as an image setter and a printer to transmit the detected information to the job processing portion JM.

The agents AM1, AM2, AM3 and AM4 are capable of autonomously monitoring the data processing portion DM without an instruction from the job processing portion JM as above described, significantly reduces the processing burdens on the job processing portion JM.

### 〈2. Second Preferred Embodiment〉

Description will now be given on a second preferred embodiment according to the present invention.

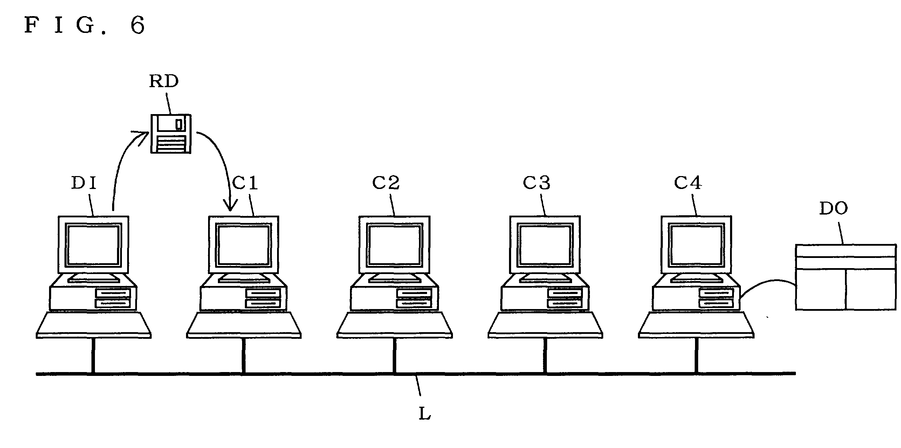

Fig. 6 shows a system configuration for data processing apparatuses according to the second preferred embodiment of the present invention. As shown in Fig. 6, the designing apparatus DI for retouches to and layouts for characters and image data and a plurality of data processing apparatuses C1, C2, C3 and C4 are connected to each other via the network L. The data processing apparatus C4 is connected to the output apparatus DO such as an image setter, a plate recorder, a proofer, and a printer.

Low-resolution data of a low-density image subjected to a process such as retouches and layouts in the designing apparatus DI is transmitted on-line through the network L to the data processing apparatus C1. Alternatively, the low-resolution data may be applied to the data processing apparatus C1 through the portable storage medium RD.

The four data processing apparatuses C1, C2, C3 and C4 implement processing functions similar to those of the data processing apparatus C of the first preferred embodiment.

Each of the data processing apparatuses C1, C2 and C3 is generally similar in internal structure to the data processing apparatus C shown in Fig. 2 except that the output interface 18 of Fig. 2 connected to the output apparatus is not provided. The data processing apparatus C4 is similar in internal structure to the data processing apparatus C shown in Fig. 2.

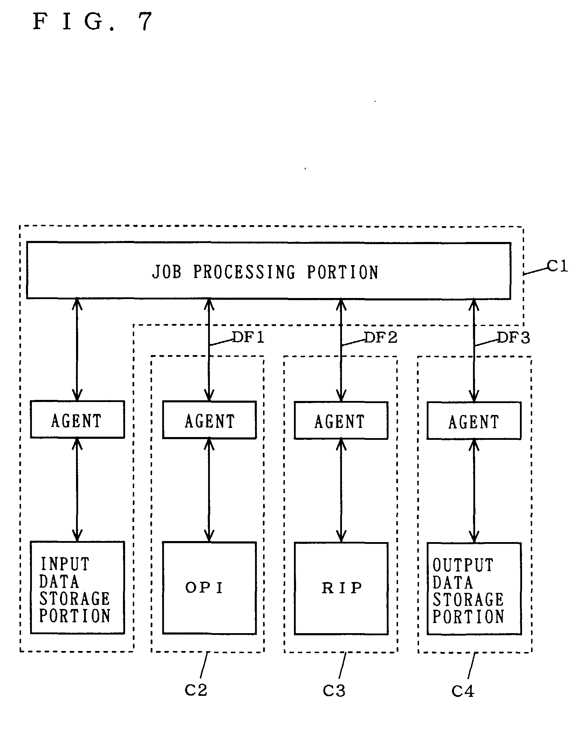

Fig. 7 shows how the processes are shared between the data processing apparatuses C1, C2, C3 and C4. The data processing apparatus C1 implements the three modules corresponding to the job processing portion, the agent for the Input data storage portion, and the input data storage portion. The data processing apparatus C2 implements the modules corresponding to the agent for the OPI processing portion, and the OPI processing portion. The data processing apparatus C3 implements the modules corresponding to the agent for the RIP processing portion, and the RIP processing portion. The data processing apparatus C4 implements the modules corresponding to the agent of the output data storage portion, and the output data storage portion.

Communications DF1, DF2 and DF3 between the job processing portion of the data processing apparatus C1 shown in Fig. 7 and the respective agents of the data processing apparatuses C2, C3 and C4 are those through the network L shown in Fig. 6.

Data applied to the data processing apparatus C1 is transmitted through the network L to the data processing apparatus C2. The data applied to the data processing apparatus C2 is converted to high-resolution data by the OPI process. The resultant high-resolution data is transmitted through the network L to the data processing apparatuses C3 and then subjected to the RIP process therein. The raster-type data provided by the RIP process is transmitted to the data processing apparatus C4. The data processing apparatus C4 outputs the raster-type data to the output apparatus DO.

The operation when an error arises in the input data storage portion, the OPI processing portion, the RIP processing portion, and the output data storage portion in the second preferred embodiment is similar to that in the first preferred embodiment. The autonomous monitoring function of the agents in the second preferred embodiment is also similar to that in the first preferred embodiment.

The second preferred embodiment is advantageous in a faster processing speed than the processing speed of the first preferred embodiment because of the use of the four data processing apparatuses as well as producing the effects of the first preferred embodiment.

### 〈3. Modifications〉

The system configuration of the present invention is not limited to that of the first and second preferred embodiment. For example, the system configuration may be such that a computer such as a workstation is used to construct the job processing portion JM, another computer such as a workstation is used to construct the agent portion AM, and still another computer such as a workstation is used to construct the data processing portion DM. In this case, the communications between the modules are those through the network.

Additionally, although the data processing portion DM comprises the four processing portions: the input data storage portion, the OPI processing portion, the RIP processing portion, and the output data storage portion in the first and second preferred embodiments, the data processing portion DM may further comprise other processing portions for trapping and imposition, for example. Further, the input data storage portion and the output data storage portion are not always required. In some cases, data are directly applied from the designing apparatus to the OPI processing portion, and directly outputted from the RIP processing portion to the output apparatus.

While the invention has been described in detail, the foregoing description is in all aspects illustrative and not restrictive. It is understood that numerous other modifications and variations can be devised without departing from the scope of the invention.

## Claims

1. An apparatus for processing data of an image, comprising:
a) a plurality of image-processing devices;
b) job command generator means for generating a job command regardless of respective device-characteristics of said plurality of said image-processing devices;
c) agent means for converting said job command into to a plurality of control commands dependent on said respective device-characteristics; and
d) control means for controlling said plurality of image-processing devices in response to said plurality of control commands, respectively, to thereby conducting said job.

2. The apparatus according to claim 1, wherein
said agent means comprises:
c-1) a plurality of unit-agents dedicated to said plurality of image-processing devices, respectively.

3. The apparatus according to claim 2, wherein
each unit-agent comprises:
monitor means for monitoring an operation of a corresponding image-processing device without monitor-requests from said job command generator means.

4. The apparatus according to claim 3, wherein
said monitor means comprises:
means for generating an error signal when an error is detected in an operation of said corresponding image-processing device.

5. The apparatus according to claim 4, wherein
each unit-agent further comprises:
means for transmitting an error message to said job command generator means in response to said error signal; and
means for stopping the operation of said corresponding image-processing device.

6. A method of processing data of an image, comprising the steps of:
a) obtaining a plurality of image-processing devices;
b) generating a job command in a job command generator means regardless of respective device-characteristics of said plurality of said image-processing devices;
c) converting said job command into to a plurality of control commands dependent on said respective device-characteristics in agent means coupled to said job command generator means; and
d) controlling said plurality of image-processing devices in response to said plurality of control commands, respectively, to thereby conducting said job.

7. The method according to claim 6, wherein
said agent means comprises a plurality of unit-agents dedicated to said plurality of image-processing devices, respectively.

8. The method according to claim 7, further comprising the step of:
d) operating each unit-agent to monitor an operation of a corresponding image-processing device without monitor-requests from said job command generator means.

9. The method according to claim 8, wherein
the step d) comprises the step of:
d-1) generating an error signal when an error is detected in an operation of said corresponding image-processing device.

10. The method according to claim 9, wherein
the step d) further comprises the steps of:
d-2) transmitting an error message to said job command generator means; and
d-3) stopping the operation of said corresponding image-processing device.
